(19) Europäisches Patentamt
European Patent Office
Office européen des brevets

(11) **EP 2 651 543 B1**

(12) **EUROPEAN PATENT SPECIFICATION**

(45) Date of publication and mention
of the grant of the patent:
**10.06.2020 Bulletin 2020/24**

(51) Int Cl.:
***B01D 61/58*** (2006.01)   ***B01D 61/36*** (2006.01)

(21) Application number: **11808382.3**

(22) Date of filing: **15.12.2011**

(86) International application number:
**PCT/NL2011/050854**

(87) International publication number:
**WO 2012/081981 (21.06.2012 Gazette 2012/25)**

(54) **MEMBRANE SEPARATION PROCESS**

MEMBRANTRENNVERFAHREN

PROCÉDÉ DE SÉPARATION MEMBRANAIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.12.2010 EP 10195183**

(43) Date of publication of application:
**23.10.2013 Bulletin 2013/43**

(73) Proprietor: **Stichting Wageningen Research
6708 PB Wageningen (NL)**

(72) Inventors:
• **VAN MEDEVOORT, Jolanda**
  **NL-2628 VK Delft (NL)**
• **CREUSEN, Raymond Johannes Maria**
  **NL-2628 VK Delft (NL)**
• **VAN ERKEL, Joost**
  **NL-2628 VK Delft (NL)**
• **BISSELINK, Roel Johannes Martinus**
  **NL-2628 VK Delft (NL)**
• **KUIPERS, Norbertus Jozef Maria**
  **NL-2628 VK Delft (NL)**

(74) Representative: **V.O.
P.O. Box 87930
2508 DH Den Haag (NL)**

(56) References cited:
**WO-A1-87/06850       WO-A1-97/17128
WO-A1-2005/089913    DE-A1-102007 012 774
US-A1- 2006 108 286**

• **EFREM CURCIO ET AL: "Membrane
  crystallizers", INDUSTRIAL & ENGINEERING
  CHEMISTRY RESEARCH, AMERICAN CHEMICAL
  SOCIETY, US, vol. 40, no. 12, 13 June 2001
  (2001-06-13) , pages 2679-2684, XP008136165,
  ISSN: 0888-5885, DOI: DOI:10.1021/IE000906D
  [retrieved on 2001-05-10]**
• **HOGAN P A ET AL: "A NEW OPTION: OSMOTIC
  DISTILLATION", CHEMICAL ENGINEERING
  PROGRESS, AMERICAN INSTITUTE OF
  CHEMICAL ENGINEERS, NEW YORK, NY, US, vol.
  94, no. 7, 1 July 1998 (1998-07-01), pages 49-61,
  XP000768656, ISSN: 0360-7275**

**Description**

The invention is directed to a membrane separation process of an aqueous feed solution.

In many known processes waste water streams are generated that have substantial concentrations of dissolved compounds, such as salts. Discharging such streams into the environment is subject to increasingly strict regulations by national and regional legislators. In particular, concentrated salt wastewater streams have gained much attention. There is an increasing demand for processing these aqueous salt solutions and ideally separating the solutions into pure water and pure salt(s). The available technologies, however, are not suitable for economically and efficiently separation of aqueous salt solutions into salt(s) and water.

A lot of thermal methods for desalination of e.g. brines or seawater to produce pure water and (more concentrated) brine are known. Some examples include multi-stage flash distillation (MSF), multiple-effect evaporation (MED/ME), and vapour-compression (VC). These evaporation techniques, however, suffer from scaling and corrosion problems and have high energy consumption.

Primarily because of the high energy costs involved for thermal processes, most recent desalination methods of seawater are based on membrane separations. Examples thereof include electrodialysis reversal (EDR), reverse osmosis (RO), nanofiltration (NF), and membrane distillation (MD).

Nowadays, reverse osmosis of seawater is often used in practice. In accordance with reverse osmosis, mechanical energy is used to overcome the osmotic pressure of the saline feedstock solution (seawater). Reverse osmosis is limited to relatively low pure water yields (the concentrate has a salt concentration that is far below the solubility limit of the salt), because of avoiding scaling and very high mechanical pressures to overcome the excessively high osmotic pressures of saturated salt solutions. The recovery efficiency (defined as the amount of purified water relative to the total amount of aqueous feed) of reverse osmosis is typically in the range of 40 to 50 % for seawater or up to 85 % for surface water. This technology is therefore not suitable for drastic concentration of aqueous salt feed solutions. In fact, thermal methods become more favourable than reverse osmosis for higher concentration salt solutions (brines).

Recently, so-called forward osmosis was investigated (J.E. Miller et al. "Forward Osmosis: A New Approach to Water Purification and Desalination" Sandia Report, Sandia National Laboratories, Albuquerque, 2006). In accordance with forward osmosis, a solution for forward osmosis containing an agent for forward osmosis (such as a mixture of $NH_3$ and $CO_2$) and having a high osmotic pressure is used at the permeate side of the membrane to "draw" liquid water from the feed through the membrane pores of a hydrophilic membrane into the permeate solution. The agent for forward osmosis is used in this case because of its influence on the osmotic pressure of an aqueous solution, and it can be separated/regenerated, for example, by thermal evaporation, pH adjustment and/or crystallisation/precipitation.

Membrane distillation (such as the Memstill® process described in WO-A-00/72947) is a thermal membrane separation process which yields a higher water quality and is also able to give higher water yields than reverse osmosis. Membrane distillation can, however, not be used for (over)saturated salt solutions because of crystallisation at and/or in the membrane external and internal surface, which will cause a reduction of flux through the membrane or even a blockage of the membrane pores.

Another known technology is osmotic distillation (Hogan et al., Chemical Engineering Progress, July 1998, 49-61). In accordance with osmotic distillation another type of osmotic agent is used because of its influence on the vapour pressure of water. Osmotic distillation is a non-thermal process, *i.e.* there is no temperature difference between (bulk) feed and (bulk) distillate at corresponding locations over the membrane.

US-A-2006/0 108 286 describes a water processing method in which the salt water is held in a supply chamber, the wall of which is formed at least in part by a hydrophobic water vapour-permeable membrane, which has a pore size such that the salt water does not fill up the pores and in which a hydrophilic membrane is arranged parallel to the hydrophobic membrane. No deliberate temperature difference is applied in this method. Rather, the temperature difference should be as small as possible. In table 1, the concentration of 50 g/kg for "Seawater out" is still much lower than the saturation concentration of NaCl. The distillation is described as "essentially isothermal".

WO-A-87/06850 discloses a process, wherein a hydrophobic semi-permeable barrier is used to concentrate a solution by osmotic distillation. Although a temperature difference may occur due to evaporation and condensation, no deliberate temperature difference is applied in this method. The bulk temperatures of the retentate and distillate are essentially equal. Figure 3 schematically shows the flow of latent heat Qc ("heat flow associated with evaporation") and the flow of sensible heat $Q_L$ ("heat flow due to losses through the membrane acting as heat exchanger") in opposite direction through the membrane.

WO-A-97/17128 describes a method of osmotic distillation for the concentration of a sample of relatively low osmotic pressure, but fails to disclose setting up a deliberate temperature difference.

In summary, the most important shortcomings of prior art technologies for processing concentrated aqueous salt solutions are the low recovery (i.e., the low percentage of feed water converted into product water), the remaining brine waste, crystallisation in and at the membrane external and internal surface at the retentate side of the membrane which causes clogging, and the need to discharge a concentrated brine solution into the environment.

Objective of the invention is to provide an improved membrane separation method of separating a solution, preferably in its pure components, *i.e.* water and the one or more compounds dissolved therein.

Further objective of the invention is to prevent (or at least reduce) the drawback faced in prior art membrane separation methods of crystallisation at the membrane external and internal surface.

The inventors found that these objectives can at least in part be met by providing a membrane separation process in which a positive driving force for water vapour permeation through the membrane is created by controlling the water vapour pressure difference between the retentate and the distillate.

Accordingly, in a first aspect the invention is directed to a membrane separation process for separating an aqueous solution and crystallizing one or more dissolved compounds according to claim 1.

Advantageously, in the process of the invention the one or more dissolved compounds at least partially crystallise in said retentate and not at the membrane surface. Accordingly, the scaling and clogging problems typically observed in some of the prior art technologies are avoided or at least strongly reduced.

In particular, the precipitation of solid material which can lead to clogging of the membrane is avoided (or at least reduced) by the present invention.

The term "retentate" as used in this application is sometimes also referred to as "feed" in the prior art. Similarly, the term "distillate" as used in this application is sometimes also referred to as "permeate" in the prior art.

The term "at corresponding points in the retentate side and the distillate side" will be understood by the person skilled in the art to refer to points at the retentate side and the distillate side of the membrane that are mirrored in the plane of the membrane. Hence, a point x at the retentate side of the membrane and a point x' at the distillate side of the membrane which are each others mirror image in the plane of the membrane will be understood by the person skilled in the art as corresponding points in the retentate side and the distillate side.

In accordance with the process of the invention, the temperature of the liquid in the liquid retentate outlet is higher than the temperature of the liquid in the feed inlet. The temperature difference between the feed inlet and liquid retentate outlet can be determined by simply measuring the temperature in the respective inlet and outlet. The feed inlet and liquid retentate outlet can for instance be equipped with appropriate temperature sensors. Of course, the retentate may have more than one inlet and/or more than one outlet. In such a case, the average temperature of the liquid in the multiple liquid retentate outlets should be higher than the average temperature of the liquid in the multiple feed inlets. This is due to a net heat flow from distillate towards the retentate. In accordance with the present invention this net heat flow from distillate towards retentate is the result of the relative temperatures of the feed inlet and the liquid retentate outlet being set.

The relative temperatures of the feed inlet and the liquid retentate outlet is set, i.e. the temperature difference between the feed inlet and the liquid retentate outlet is created on purpose, by active heating. This may be achieved, for instance, by heating the membrane. Heating the membrane can result in the feed not losing heat or in the feed being slowly heated during its flow along the membrane. Heating the membrane can be achieved by applying an electrically-conductive membrane, such as a membrane that comprises conductive carbon nanotubes. In other words, in accordance with the method of the invention a temperature difference is applied deliberately so as to prevent crystallisation even though this lowers the driving force for membrane distillation. An alternative driving force for membrane distillation is provided for by other means than a temperature difference. Preferably, a temperature difference between the feed inlet and the liquid retentate outlet is set up such that there is a temperature difference between the bulk retentate and bulk distillate. In addition, or in the alternative, the distillate side of the membrane may be heated. The distillate can be heated in accordance with conventional heating techniques. Normally, a heated distillate will also result in the membrane surface at the retentate side to have a higher temperature than the retentate. A further possibility is to heat a spacer, which may optionally be present at the retentate side of the membrane and/or the distillate side of the membrane. Naturally, it is also possible to cool the retentate in order to contribute to the required temperature difference in addition to the active heating. However, heating the distillate, as said active heating, is preferred over cooling the retentate.

In a preferred embodiment, the temperature of the liquid in the liquid retentate outlet is 0.1-15 °C higher than the temperature of the liquid in the feed inlet, preferably 0.1-12 °C, more preferably 0.1-10 °C higher, even more preferably 0.2-8 °C higher, such as 0.5-7 °C. Such relatively small temperature differences ensure that crystallisation of the salt does not or hardly occur at (or directly near) the membrane internal and/or external surface, which could lead to disadvantageous scaling or clogging of the membrane pores.

In an embodiment, the temperature of the distillate is higher than the temperature of the retentate at corresponding points on the distillate and retentate side of the membrane. For instance, the temperature of the distillate can be 1-15, such as 1-10 °C higher than the temperature of the retentate when measured at an equal distance from the membrane, preferably 2-12 °C higher, such as 2-8 °C higher, or 3-7 °C higher.

In order to achieve a positive driving force for water vapour permeation through the membrane, typically, the water vapour pressure at the distillate side of said membrane can be maintained at least 0.01 bar lower than the water vapour pressure at the retentate side of said membrane, such as at least 0.03 bar lower, or at least 0.05 bar lower, preferably at least 0.1 bar lower, such as 0.1-0.5 bar lower. The exact water vapour pressure difference, however, depends on the type of compound to be separated and the applied temperature difference between the membrane surface at the retentate side and the retentate. The required water vapour pressure difference for a specific compound can, for instance, be found from experimental data or using the correlation between the saturated water vapour pressure, the temperature, and the concentration of the respective compound (see e.g. VDI-Wärmeatlas, Springer-Verlag, Berlin and Heidelberg GmbH, 2006).

In accordance the process of invention, the water vapour pressure at the distillate side of said membrane is maintained lower than the water vapour pressure at the retentate side of said membrane by providing a stripping agent in the distillate, or by maintaining the absolute pressure at the distillate side of said membrane lower than the absolute pressure at the retentate side of said membrane. For the embodiment with providing a stripping agent in the distillate, which is highly preferred, the stripping agent reduces the water vapour pressure at the distillate side of the membrane which gives rise to a positive driving force for water vapour permeation through the membrane. The stripping agent at the distillate side of the membrane can suitably be provided in the form of an aqueous solution, referred herein as the stripping solution. The stripping agent can be separated from the distilled water in a further separation process in order to get pure water and to recover the stripping agent. Recovered stripping agent can then be recycled to the distillate.

The term "stripping agent" as used in this application is meant to refer to a substance or a mixture of substances which is capable to decrease the vapour pressure of water relative to its saturated vapour pressure at the same temperature.

In accordance with this highly preferred embodiment of the invention, overall the separation of the one or more dissolved compounds and water of the aqueous feed solution is replaced by a separation of stripping agent and water of the distillate, with the advantage that the stripping agent can be chosen at will, for example on the basis of the water solubility of the stripping agent. The free choice of the stripping agent largely increases the degrees of freedom.

Suitable examples of stripping agents include salts, such as one or more selected from the group consisting of ammonium bicarbonate, ammonium chloride, ammonium sulphate, calcium chloride, calcium nitrate, lithium chloride, lithium bromide, magnesium chloride, magnesium sulphate, potassium bicarbonate, potassium bromide, potassium carbonate, potassium chloride, potassium nitrate, potassium or sodium salts of ortho- and pyrophosphoric acid, potassium sulphate, sodium benzophenone, sodium carbonate, sodium bicarbonate, sodium chloride, sodium chlorate, sodium hydroxide, sodium sulphate. Preferably, potassium or sodium salts of ortho- and pyrophosphoric acid are used, because of their low equivalent weights, very high water solubility, and very steep positive temperature coefficients of solubility (i.e. a change in temperature has a large effect on the solubility of these compounds, making it easy to recover them). Also sugars may suitably be applied as stripping agent, such as fructose, glucose, and sucrose. Mixtures of these sugars may also be applied, such as a mixture of glucose and fructose. Further suitable stripping agents include sulphuric acid, ammonia, carbon dioxide, polyols, ionic liquids and sulphur dioxide.

In an alternative embodiment (which may optionally be combined with the above embodiment wherein a stripping agent is applied), the water vapour pressure at the distillate side of said membrane is maintained lower than the water vapour pressure at the retentate side of said membrane by maintaining the absolute pressure at the distillate side of said membrane lower than the absolute pressure at the retentate side of said membrane. This can be achieved mechanically using a pressure-inducing component. The pressure-inducing component can, for instance, be a piston. The applied absolute pressure difference can vary depending on the intended application, as long as a positive driving force is created for water vapour permeation through the membrane. The difference in absolute pressure can, for example be 5-100 atm. In an embodiment, the difference in absolute pressure is 30 atm or more, such as 50 atm or more. This embodiment can suitably be applied for seawater. In another embodiment, the difference in absolute pressure is 5 atm or more. This embodiment can suitably be applied for brackish water.

The membrane is preferably a hydrophobic membrane, so that liquid water is prevented from wetting the membrane. The pores of the hydrophobic membrane are only permeable for water vapour, but not for liquid water. It is, however, also possible to use a hydrophilic membrane that has been equipped with a hydrophobic layer or coating. The membranes preferably have porosity greater than 70 %, more preferably greater than 80 %. Furthermore, the average pore size of the pores in the membrane is preferably larger than 0.01 $\mu$m, more preferably 0.05 $\mu$m, even more preferably between 0.06 and 0.3 $\mu$m, such as between 0.07 and 0.1 $\mu$m. Particularly suitable membranes include commercially available membranes made of materials such as polytetrafluorethylene, polyvinylidene fluoride, polypropylene, polyethylene, and the like. The porous membranes to be used in accordance with the present invention can be laminated with other materials (*e.g.* non woven materials of polypropylene, polyethylene terephthalate *etc.*), which protect the membranes against abrasion, and/or give mechanical support. So-called asymmetric microfiltration membranes made of materials such as polyethersulphone, polysulphone, polyacrylonitrile, polyamides, *etc.* can also be used. In this context it is preferably to make the surface of these membranes completely or partially additionally hydrophobic, for example by means of a coating or other surface modification. The membrane can be any type of membrane, such as a planar membrane, a tubular membrane, or a hollow fibre membrane. The membrane may optionally be applied in spirally wound configuration. In an embodiment, the membrane is in direct contact with the distillate. This allows improved thermal conductivity. It is preferred that the membrane has good thermal conductive properties, in order to (maintain an elevated temperature at the retentate side and) prevent crystallisation at the membrane wall.

The one or more dissolved compounds in the aqueous feed solution can include various compounds. In accordance with the invention, the one or more dissolved compounds are characterised in that they have increasing water solubility with increasing temperature.

Suitable compounds include electrolytes (including salts, acids, and bases), sugars, gasses, enzymes, *etc.* Preferably, the one or more dissolved compounds comprise one or more electrolytes.

In particular, suitable electrolytes include salts present in seawater such as sodium chloride; sulphates of potassium, or barium; phosphates of calcium, magnesium, potassium, or barium; chlorides of calcium, magnesium, potassium, or barium; and carbonates of calcium, magnesium, potassium, or barium.

In a preferred embodiment of the invention, the aqueous feed solution used in accordance with the invention comprises seawater and/or brine. The aqueous feed solution may comprise a concentrate of reverse osmosis and/or process waste water. In a specific embodiment, the aqueous feed solution is a wastewater stream from a dewatering process, such as a Memstill® process as described in WO-A-00/72947.

In the invention, at least one of the one or more dissolved compounds will be present in the aqueous feed solution in a concentration near saturation concentration. Hence, the lower limit of the concentration of the respective compound in the feed is 90 % of the saturation concentration of the respective compound at the operating temperature (*i.e.* 10 % below the saturation concentration of the respective compound), preferably 95 % of the saturation concentration (*ie.* 5 % below the saturation concentration). The upper limit of the concentration of the respective compound in the feed depends on the solubility of the compound in the aqueous feed. Typically, the upper limit of the concentration of the respective compound is given by the concentration at which crystals form. For dissolved compounds with a relatively high solubility (*viz.* compounds having a solubility of 25 grams or more per litre water at 20 °C), such as NaCl, a small positive deviation from saturation concentration in the order of 1 % or less already corresponds with a high supersaturation level that results in the formation of crystals. Therefore, the upper limit for the concentration of such compounds in the feed is about 101 % of the saturation concentration (*i.e.* 1 % higher than the saturation concentration of the respective compound). For dissolved compounds with a relatively low solubility (*viz.* compounds having a solubility of between 0.5 and 25 grams per litre water at 20 °C), such as gypsum ($CaSO_4 \cdot 2H_2O$), the positive deviation from saturation concentration will be larger in order to create a sufficiently high supersaturation to form crystals, this can be in the order of 10 %. Therefore, the upper limit for the concentration of such compounds in the feed is about 110 % of the saturation concentration (*i.e.* 10 % higher than the saturation concentration of the respective compound). For dissolved compounds with even lower saturation concentration (*viz.* compounds having a solubility of less than 0.5 grams per litre water at 20 °C), such as $CaCO_3$, the positive deviation from saturation concentration can be in the order of 100 % or more before crystals are formed. Therefore, the upper limit for the concentration of such compounds in the feed is about 200 % of the saturation concentration (*i.e.* 100 % higher than the saturation concentration of the respective compound).

It may be favourable to apply the process of the invention more than one time, for instance in order to crystallise different compounds with differing crystallisation characteristics, *i.e.* solubility, in various fractions. In such a case, for instance, at least part of the retentate of a first cycle of the process of the invention can be used as the aqueous feed solution of a second cycle of the process of the invention. At least part of the retentate of a second cycle of the process of the invention may be used as the aqueous feed solution of a third cycle of the process of the invention, and so on depending on the amount of dissolved compounds present in the aqueous feed solution.

In order to recover purified water from the distillate, at least part of the distillate may be directed to a separation process for separating stripping agent from water. Such a separation process is preferably a membrane separation process, such as the Memstill® process described in WO-A-00/72947. Recovered stripping agent can then be recycled to the distillate side of the membrane for maintaining the water vapour pressure at the distillate side of the membrane lower than the water vapour pressure at the retentate side of the membrane.

Crystals may be recovered from the retentate by directing at least part of the retentate to a separation process for separating crystals from water. Such a separation process may for example be a centrifuge, a filtration process or a membrane separation process. It is also possible to direct at least part of the retentate to a separation process for further crystallisation.

Intermediate separation of at least part of the crystals can in some embodiments be advantageous, for instance, in order to improve the purity of the crystals that are formed. For instance, two or more different fractions of crystals can be collected from the retentate as a function of time. Such fractionation of the crystals may also be employed when two or more different dissolved compounds are to be crystallised.

The invention is now further illustrated by the following Example.

Example

For an aqueous solution of NaCl the following correlation exists between the saturated vapour pressure of water $p_{sat}$ (in Pa), the salt concentration $C_{salt}$ (in mol/l), and the temperature $T$ (in K):

$$p_{sat} = \left(1 - C_{salt} \cdot d\right) \cdot e^{\left(a - \frac{b}{T-c}\right)},$$

wherein $a$ = 23.16524, $b$ = 3793.09, $c$ = 46.2239, and $d$ = 0.04706.

If NaCl is present neither in the retentate, nor in the distillate, and if the temperature of the retentate is 75 °C and the temperature of the distillate is 70 °C at corresponding locations relative to the membrane (hence $\Delta T$ = -5 °C), then the above equation yields a water vapour pressure difference of 0.08 bar.

If NaCl is present at maximal solubility of 6.5 mol/l (at 75°C) in the retentate, and if the retentate temperature is 75 °C and the distillate temperature is 80 °C (hence $\Delta T$ = +5 °C), then the above equation yields a water vapour pressure difference of -0.19 bar.

In order to realise a positive driving force for water vapour membrane permeation and have a water transport from the retentate to the distillate side of the membrane, the water vapour pressure of the distillate should be lowered by more than 0.19 bar. Approximately, 50 % of this 0.19 bar is required to compensate for the negative temperature gradient, while the remaining 50 % is required to compensate for the influence of the NaCl on the water vapour pressure.

The required vapour pressure difference between the retentate side of the membrane and the distillate side of the membrane can be created by adding a stripping agent, such as $CaCl_2$, to the 80 °C distillate. As shown in the table below, for a $CaCl_2$ concentration of more than 35 wt.% based on total weight of the distillate, the vapour pressure difference becomes positive, so that water vapour is transported from the 75 °C retentate to the 80 °C distillate. For a saturated solution of $CaCl_2$ the net driving force is a vapour pressure difference of approximately 0.2 bar.

| Concentration $CaCl_2$ in distillate (wt.%) at 80 °C | $p_{sat, water}$ (kPa) in distillate at 80 °C | $\Delta p$ (kPa) * |
|---|---|---|
| 0 | 46.8 | -18.4 |
| 10 | 44.4 | -16.0 |
| 15 | 42.3 | -13.9 |
| 20 | 39.6 | -11.2 |
| 25 | 36.0 | -7.6 |
| 30 | 31.6 | -3.2 |
| 35 | 26.6 | 1.8 |
| 40 | 21.6 | 6.8 |
| 45 | 17.3 | 11.1 |
| 50 | 13.6 | 14.8 |
| 59 (about saturation) | 8.2 | 20.2 |
| *$\Delta p$ = $p_{sat\ water}$ (distillate at 80 °C) - $p_{sat\ water}$ (retentate at 75 °C and saturated NaCl) (kPa) | | |

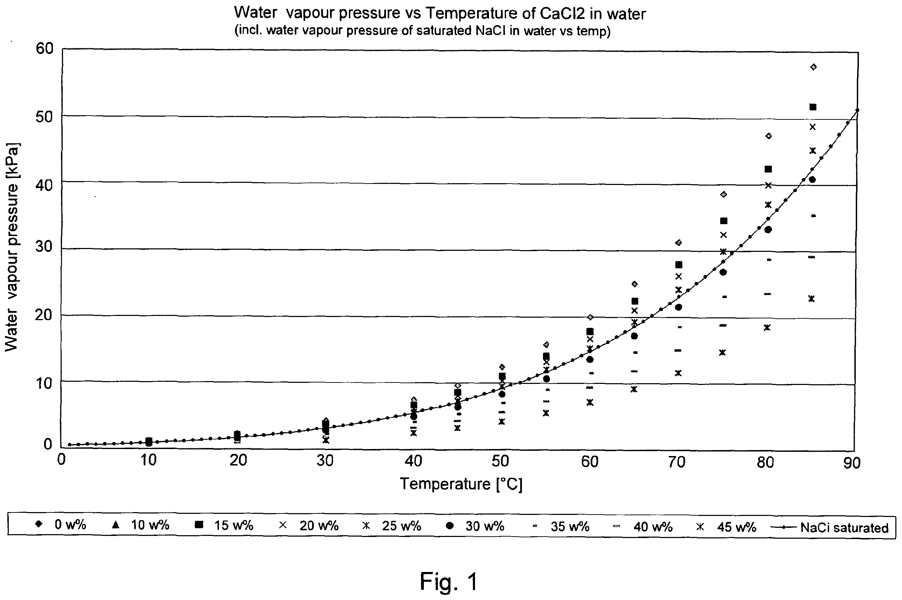

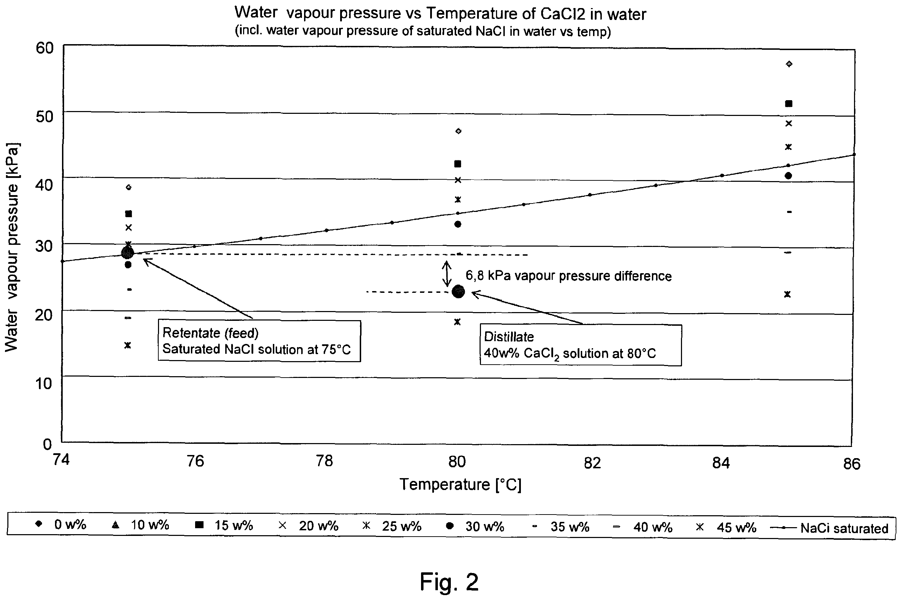

The water vapour pressure as a function of temperature is shown in Figure 1 for various $CaCl_2$ concentrations, including the water vapour pressure of a saturated NaCl solution. In case the retentate is a saturated NaCl solution at 75 °C and a 40 wt.% $CaCl_2$ solution is used as distillate at 80 °C, then Figure 2 (which is a blow-up of the graph in Figure 1) shows that water vapour can permeate from the retentate NaCl solution through the membrane to the distillate $CaCl_2$ solution, because there is a net vapour pressure difference of 28.4 kPa - 21.6 kPa = 6.8 kPa.

For the invention, the temperature of the liquid retentate outlet needs to be higher than the temperature of the liquid feed inlet for the membrane module. On (differential) process scale, this corresponds with a temperature of the liquid retentate which is lower than the corresponding temperature of the membrane at the liquid retentate side. This requires that the heat flow through the membrane from stripping solution towards retentate is higher than the amount of energy needed for evaporation of the water to create a water vapour flux towards the distillate, *i.e.*

$$\lambda_{eff,m}\left(\frac{\Delta T}{\delta_m}\right) > J\ \Delta H_{v,water}$$

with $\lambda_{eff,m}$ the effective heat conduction coefficient for heat transport (diffusion) through the membrane, $\Delta T$ the temperature difference across the membrane, $\delta_m$ the membrane thickness, $J$ the mass flow rate of evaporated water and $\Delta H_{v, water}$ the heat of vaporisation of water (which depends on the salts concentration and the temperature).

Assuming the above value of $\Delta T$ = 5 °C (retentate: 75 °C, distillate: 80 °C), and typical membrane properties $\delta_m$ = 0.2 mm and $\lambda_{eff,m}$ = 0.05 W/m²K, the temperature of the liquid retentate is higher than the temperature of the liquid feed inlet if:

$$J \, \Delta H_{v,water} < 0.05 \left( \frac{5}{0.0002} \right) = 1250 \left[ \frac{W}{m^2} \right]$$

For $\Delta H_{v,water}$ = 2.3 MJ/kg (pure water), this is realised for a flux $J < 5.4 \times 10^{-4}$ (kg/m²s). Note that in reality $\Delta H_{v,water}$ increases with increasing salt concentration, resulting in a lower value of the flux as calculated above. On the other side, a thermally more conductive membrane and/or a thinner membrane allows higher water vapour fluxes.

## Claims

1. Membrane separation process for separating an aqueous solution and crystallizing one or more dissolved compounds, comprising passing an aqueous feed comprising said one or more dissolved compounds through a membrane module, wherein said one or more dissolved compounds have an increasing water solubility with increasing temperature, wherein said one or more dissolved compounds are present in the aqueous feed solution in a concentration of the respective compound of at least 90% of the saturation concentration of the respective compound at the operating temperature, wherein the membrane module comprises a feed inlet and a liquid retentate outlet,

   - wherein the temperature of the liquid in the liquid retentate outlet is higher than the temperature of the liquid in the feed inlet,
   - and wherein a positive driving force for water vapour permeation through the membrane is created by maintaining the water vapour pressure at the distillate side of the membrane lower than the water vapour pressure at the retentate side of the membrane at corresponding points in the retentate side and the distillate side by other means than by a temperature difference,
   - such that said one or more dissolved compounds at least partially crystallise in said retentate and not at the membrane surface,
   - and wherein the relative temperatures of the feed inlet and the liquid retentate outlet are set,
   - wherein said setting the relative temperatures of the feed inlet and the liquid retentate outlet comprises active heating which involves heating the distillate side of the membrane, heating a spacer optionally present at the retentate side of the membrane, and/or heating the membrane in said membrane module,
   - and wherein the water vapour pressure at the distillate side of said membrane is maintained lower than the water vapour pressure at the retentate side of said membrane by providing a stripping agent in the distillate or by maintaining the absolute pressure at the distillate side of said membrane lower than the absolute pressure at the retentate side of said membrane.

2. Membrane separation process according to claim 1, wherein the one or more dissolved compounds comprise one or more electrolytes.

3. Membrane separation process according to claim 1 or 2, wherein the membrane in said membrane module is a hydrophobic membrane.

4. Membrane separation process according to any one of claims 1-3, wherein the aqueous feed solution comprises seawater and/or brine, preferably the aqueous feed solution is a waste water stream from a dewatering process.

5. Membrane separation process according to any one of claims 1-4, wherein at least part of the retentate is directed to a separation process for further crystallisation and/or separating crystals from the retentate.

6. Membrane separation process according to any one of claims 1-5, wherein the temperature of the liquid in the liquid retentate outlet is 0.1-15 °C higher than the temperature of the liquid in the feed inlet, preferably 0.2-8 °C higher, such as 0.5-7 °C.

7. Membrane separation process according to any one of claims 1-6, wherein the water vapour pressure at the distillate side of said membrane is maintained at least 0.01 bar lower than the water vapour pressure at the retentate side of said membrane, preferably 0.1 bar lower, such as 0.1-0.5 bar lower.

**Patentansprüche**

1. Membrantrennverfahren zum Trennen einer wässrigen Lösung und Kristallisieren einer oder mehrerer gelöster Verbindungen, umfassend Durchlaufen einer wässrigen Beschickung, umfassend die eine oder mehreren gelösten Verbindungen, durch ein Membranmodul, wobei die eine oder die mehreren gelösten Verbindungen eine zunehmende Wasserlöslichkeit mit zunehmender Temperatur haben, wobei die eine oder die mehreren gelösten Verbindungen in der wässrigen Beschickungslösung in einer Konzentration der jeweiligen Verbindung von wenigstens 90 % der Sättigungskonzentration der jeweiligen Verbindung bei Betriebstemperatur vorhanden sind, wobei das Membranmodul einen Beschickungseinlass und einen flüssiges Retentat Auslass umfasst,

   - wobei die Temperatur der Flüssigkeit in dem flüssiges Retentat Auslass höher ist als die Temperatur der Flüssigkeit im Beschickungseinlass,
   - und wobei eine positive treibende Kraft für Wasserdampfpermeation durch die Membran erzeugt wird, indem der Wasserdampfdruck auf der Destillatseite der Membran niedriger als der Wasserdampfdruck auf der Retentatseite der Membran an entsprechenden Punkten auf der Retentatseite und der Destillatseite durch andere Mittel als durch eine Temperaturdifferenz gehalten wird,
   - so dass sich die eine oder die mehreren gelösten Verbindungen in dem Retentat und nicht an der Membranoberfläche wenigstens teilweise kristallisieren,
   - und wobei die relativen Temperaturen des Beschickungseinlasses und des flüssiges Retentat Auslasses eingestellt werden,
   - wobei das Einstellen der relativen Temperaturen des Beschickungseinlasses und des flüssiges Retentat Auslasses aktives Erwärmen umfasst, das Erwärmen der Destillatseite der Membran, Erwärmen eines Abstandhalters, optional auf der Retentatseite der Membran vorhanden, und/oder Erwärmen der Membran in dem Membranmodul einschließt,
   - und wobei der Wasserdampfdruck auf der Destillatseite der Membran niedriger als der Wasserdampfdruck auf der Retentatseite der Membran gehalten wird, indem ein Abziehmittel in dem Destillat bereitgestellt wird oder indem der absolute Druck auf der Destillatseite der Membran niedriger als der absolute Druck auf der Retentatseite der Membran gehalten wird.

2. Membrantrennverfahren nach Anspruch 1, wobei die eine oder die mehreren gelösten Verbindungen einen oder mehrere Elektrolyte umfassen.

3. Membrantrennverfahren nach Anspruch 1 oder 2, wobei die Membran in dem Membranmodul eine hydrophobe Membran ist.

4. Membrantrennverfahren nach einem der Ansprüche 1 - 3, wobei die wässrige Beschickungslösung Meerwasser und/oder Salzlösung umfasst, vorzugsweise ist die wässrige Beschickungslösung ein Abwasserstrom aus einem Entwässerungsverfahren.

5. Membrantrennverfahren nach einem der Ansprüche 1 - 4, wobei wenigstens ein Teil des Retentats auf ein Trennverfahren zur weiteren Kristallisation und/oder zum Trennen von Kristallen vom Retentat gerichtet ist.

6. Membrantrennverfahren nach einem der Ansprüche 1 - 5, wobei die Temperatur der Flüssigkeit in dem flüssigen Retentat Auslass 0,1 bis 15 °C höher als die Temperatur der Flüssigkeit in dem Beschickungseinlass ist, vorzugsweise 0,2 bis 8 °C höher, so wie 0,5 bis 7 °C.

7. Membrantrennverfahren nach einem der Ansprüche 1 - 6, wobei der Wasserdampfdruck auf der Destillatseite der Membran wenigstens 0,01 bar niedriger als der Wasserdampfdruck auf der Retentatseite der Membran gehalten wird, vorzugsweise 0,1 bar niedriger, so wie 0,1 - 0,5 bar niedriger.

**Revendications**

1. Procédé de séparation sur membrane pour séparer une solution aqueuse et cristalliser un ou plusieurs composés qui y sont dissous, comprenant le passage sur un module membranaire d'une solution aqueuse alimentée comprenant lesdits un ou plusieurs composés dissous, dans lequel lesdits un ou plusieurs composés dissous ont une solubilité croissant dans l'eau en fonction de la croissance de la température, dans lequel lesdits un ou plusieurs composés dissous sont présents dans la solution aqueuse alimentée en une concentration du composé concerné d'au moins 90% de la concentration à saturation, à la température opératoire, du composé concerné, dans lequel le module membranaire comprend une entrée pour la solution alimentée et une sortie pour le rétentat liquide,

   - dans lequel la température du liquide en sortie du rétentat liquide est supérieure à la température du liquide alimenté à l'entrée,
   - et dans lequel une force d'entraînement positive pour la perméation de vapeur d'eau à travers la membrane est créée par maintien de la pression de vapeur d'eau du côté distillat de la membrane à un niveau inférieur à la pression de la vapeur d'eau du côté rétentat de la membrane en des points correspondants du côté rétentat et du côté distillat par d'autres moyens que par une différence de température,
   - de sorte que lesdits un ou plusieurs composés dissous cristallisent au moins partiellement dans ledit rétentat et non à la surface de la membrane,
   - et dans lequel les températures relatives de la solution alimentée à l'entrée et du rétentat liquide à la sortie sont régulées,
   - dans lequel ladite régulation des températures relatives à l'entrée de la solution alimentée et à la sortie du rétentat liquide comprend un chauffage actif qui implique le chauffage du côté distillat de la membrane, le chauffage d'une entretoise éventuellement présente du côté rétentat de la membrane, et/ou le chauffage de la membrane dans ledit module membranaire,
   - et dans lequel la pression de vapeur d'eau du côté distillat de ladite membrane est maintenue inférieure à la pression de vapeur d'eau du côté rétentat de ladite membrane par présence d'un agent d'extraction (stripping) dans le distillat ou par maintien de la pression absolue du côté distillat de ladite membrane à une pression inférieure à la pression absolue du côté rétentat de ladite membrane.

2. Procédé de séparation sur membrane selon la revendication 1, dans lequel le ou les composés dissous comprennent un ou plusieurs électrolytes.

3. Procédé de séparation sur membrane selon la revendication 1 ou 2, dans lequel la membrane dans ledit module membranaire est une membrane hydrophobe.

4. Procédé de séparation sur membrane selon l'une quelconque des revendications 1 à 3, dans lequel la solution aqueuse alimenté comprend de l'eau de mer et/ou de la saumure, de préférence la solution aqueuse alimentée est un courant d'eaux usées provenant d'un processus d'assèchement.

5. Procédé de séparation sur membrane selon l'une quelconque des revendications 1 à 4, dans lequel au moins une partie du rétentat est envoyée vers un procédé de séparation pour effectuer une cristallisation et/ou une séparation des cristaux du rétentat supplémentaire.

6. Procédé de séparation sur membrane selon l'une quelconque des revendications 1 à 5, dans lequel la température du liquide dans la sortie du rétentat liquide est de 0,1 à 15°C supérieure à la température à l'entrée du liquide alimenté, de préférence de 0,2 à 8°C supérieure, telle que 0,5 à 7°C.

7. Procédé de séparation sur membrane selon l'une quelconque des revendications 1 à 6, dans lequel la pression de vapeur d'eau du côté distillat de ladite membrane est maintenue inférieure d'au moins 0,01 bar, de préférence inférieure de 0,1 bar, telle que de 0,1-0,5 bar inférieure, à la pression de vapeur d'eau du côté rétentat de ladite membrane.

Water vapour pressure vs Temperature of CaCl2 in water
(incl. water vapour pressure of saturated NaCl in water vs temp)

◆ 0 w% ▲ 10 w% ■ 15 w% ✕ 20 w% ✳ 25 w% ● 30 w% − 35 w% ⊐ 40 w% ✳ 45 w% ──•── NaCl saturated

Fig. 1

EP 2 651 543 B1

Fig. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 0072947 A
- US 20060108286 A

- WO 8706850 A
- WO 9717128 A

### Non-patent literature cited in the description

- Forward Osmosis: A New Approach to Water Purification and Desalination. **J.E. MILLER et al.** Sandia Report. Sandia National Laboratories, 2006

- **HOGAN et al.** *Chemical Engineering Progress,* July 1998, 49-61